Europäisches Patentamt

European Patent Office

Office européen des brevets

(19)

(11) Publication number: **0 164 209**
**A1**

(12) **EUROPEAN PATENT APPLICATION**

(21) Application number: **85302946.0**

(22) Date of filing: **26.04.85**

(51) Int. Cl.⁴: **G 01 R 31/28**

(30) Priority: **09.05.84 GB 8411733**

(43) Date of publication of application: **11.12.85**
**Bulletin 85/50**

(84) Designated Contracting States: **DE FR IT NL**

(71) Applicant: **The General Electric Company, p.l.c., 1 Stanhope Gate, London W1A 1EH (GB)**

(72) Inventor: **Baker, Keith, 5 Timor Court Longford Avenue, Southall Middlesex, UB1 3QS (GB)**

(74) Representative: **Pope, Michael Bertram Wingate, Central Patent Department Wembley Office The General Electric Company, p.l.c. Hirst Research Centre East Lane, Wembley Middlesex HA9 7PP (GB)**

(54) **Integrated circuit testing arrangements.**

(57) An integrated circuit testing arrangement of the kind using the level sensitive scan design technique wherein there is used a test generator (7) of such a form that each cone of the combinational logic (1) of the integrated circuit is exhaustively tested. In a preferred arrangement the test generator (7) comprises a maximal length linear feedback shift register (LFSR), i.e. en LFSR which has $2^N-1$ different states where N is the number of stages in the LFSR, and the LFSR is chosen so that $2^N-1$ and the number of elements in the scan path (5) are relatively prime.

Integrated circuit testing arrangements

This invention relates to integrated circuit testing arrangements.

Many integrated circuits currently being manufactured are so complex that it requires almost as much effort to test them as to design them.

In order to alleviate the problem it has become common practice to adopt design rules for integrated circuits which facilitate testing of the circuits.

One design for testability technique which has been proposed is the so-called level sensitive scan design (LSSD) technique. In this technique the circuit is designed so as to comprise a number of bistable elements e.g. D-type flip-flops, which for test purposes are connected in series to form effectively a shift register known as a scan path. Apart from these bistable elements the circuit elements are all logic elements which together form a combinational logic arrangement whose required response to known inputs is totally predictable. The test technique involves deriving inputs for the combinational logic from the scan path and monitoring the resulting outputs of the combinational logic. To test the circuit sequences of data are successively entered into the scan path shift register from a test generator, and the outputs of the combinational logic monitored for each such sequence.

In one proposed scheme the scan path elements are first set to predetermined states by a data sequence derived from the test generator. The resulting outputs of the scan path elements are applied to the inputs of the combinational logic and the scan path elements reset in accordance with the resulting outputs of the combinational logic. The resulting data in the scan path is then shifted out to an analyser, normally referred to as a signature analyser, to determine whether the circuit operated correctly. The test cycle is then repeated with a new sequence of data entered into the scan path as the test result data was shifted out.

With known such arrangements the test sequence generator is arranged to generate pseudo random data sequences for entry to the scan path. As a result the combinational logic is not exhaustively tested, i.e. the combinational logic is not tested under every different possible combination of inputs.

To meet this problem a variation of the LSSD technique has been proposed in which the scan path is divided into two parts, one part being used to set the inputs to the combinational logic and the other part being used to monitor the outputs of the combinational logic. With this arrangement the test data sequence in the part of the scan path connected to the inputs of the combinational logic is not lost when reading out data and it is possible to generate successive sequences of data for testing by shifting the data in the input path of the scan path in steps across the inputs of the combinational logic. With this arrangement it therefore becomes practical to change the states of the inputs to the combinational logic in an ordered manner so as to test the combinational logic exhaustively. Unfortunately the design rules requirement to connect some of the scan path elements solely to inputs of the combinational logic and others of the scan path elements solely to outputs of the combinational logic renders circuit design a practical impossibility.

It is an object of the present invention to provide an integrated circuit testing arrangement wherein these difficulties are alleviated.

According to the present invention an integrated circuit testing arrangement comprises: a scan path comprising bistable elements of the integrated circuit connected, for testing purposes, in a series shift register arrangement, the elements of the scan path each having an output connected to an input of a combinational logic arrangement of the integrated circuit and an input connected to an output of said combinational logic arrangement; a test sequence generator for supplying binary data for clocking into the scan path for test purposes, the generator being arranged to supply sequences of data to the scan path each having a number of bits equal to the number of elements in the scan path; means for clocking the elements of the scan path to cause each element to assume either the same state as the preceding element in the scan path, or to assume the state of the associated output of the combinational logic arrangement, the clocking means being operable to cause alternately the scan path elements to assume the states of the associated outputs of the combinational logic arrangement, and to receive a new sequence of data from said test generator; and means for analysing data clocked out of said scan path as each new sequence of data is received from said generator; said generator being arranged to enter successive sequences of data into the scan path so that, for each set of inputs of the combinational logic arrangement which are connected via the combinational logic arrangement to the same output of the combinational logic arrangement, there are applied to the inputs of that set all possible combinations of different inputs.

In a preferred arrangement in accordance with the invention said test generator comprises an N-stage linear feed back shift register (LFSR) having an output which is supplied to an input of the first element in the scan path, the LFSR being clocked through its possible states to effect insertion of each new sequence of data into the scan path, the LFSR having $2^N -1$ different possible states, and the number of different possible states and the number of elements in the scan path being realtively prime.

Two (or more) numbers are said to be relatively prime when their greatest common divider is one.

By an LFSR is meant an arrangement comprising a recirculating shift register modified so that, on being clocked, at least one stage assumes a state determined by a linear combination of the state of the preceding stage and at least one other stage. Typically the output of an LFSR is derived from a single stage, but an output may alternatively or additionally be constituted by a linear combination of the states of any two or more stages of the register.

In the above preferred arrangement, in order to achieve exhaustive testing, the LFSR must of course still be chosen so as to meet the requirement according to the invention regarding each set of inputs of the combinational logic arrangement which are connected via the combinational logic to the same output of the logic. However, since the properties of the sequences of outputs produced by different forms of LFSR are readily logically catalogued, the choice of a suitable LFSR for testing a particular integrated circuit arrangement is a relatively simple matter using a computer.

In order to complete an exhaustive test it is, in addition to inserting new sequences from the LFSR, necessary to set the elements of the scan path to either the all zeros or all ones state and test the combinational logic with this sequence, since an individual LFSR is capable of supplying only one of these test conditions.

One integrated circuit testing arrangement in accordance with the invention will now be described by way of example with reference to the accompanying drawings in which:-

Figure 1 is a schematic diagram of the arrangement.

Figure 2 is a schematic diagram of part of the arrangement of Figure 1 in greater detail; and

Figures 3 to 10 are diagrams illustrating various features of test sequence generators suitable for use in the arrangement of Figure 1.

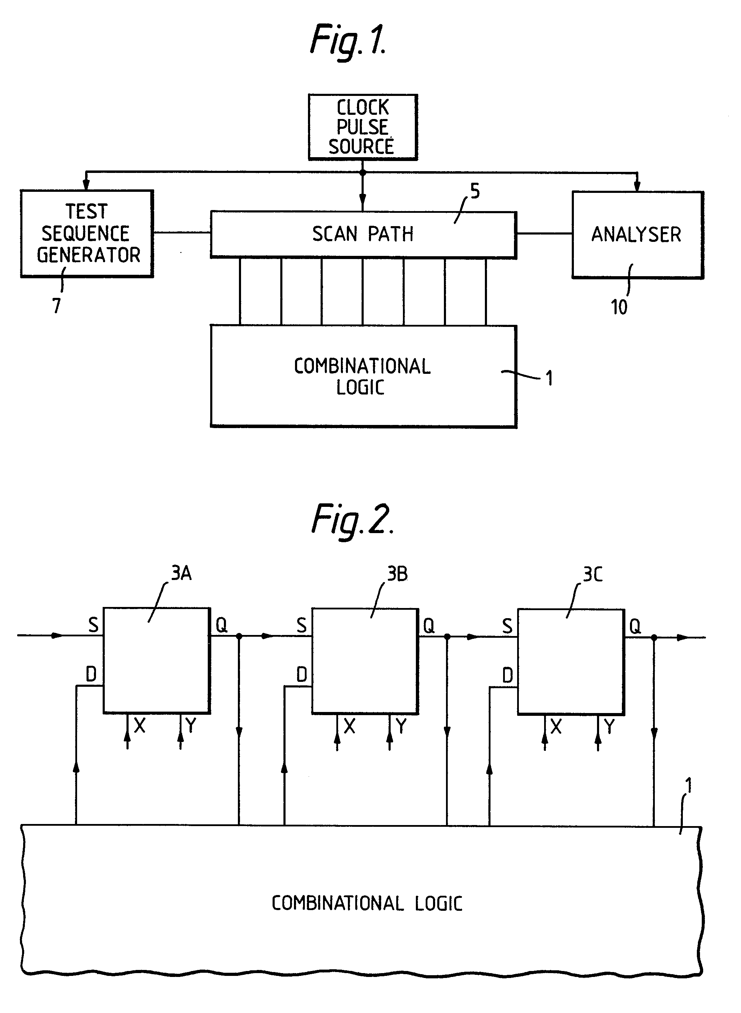

Referring to Figures 1 and 2 the integrated circuit to be tested is designed so as to comprise a large arrangement 1 of combinational logic elements, i.e. gates, each of which elements produces a predictable desired output in response to any combination of possible inputs. In addition to this combinational logic arrangement 1 the circuit includes a number of bistable elements, each of the bistable elements comprising a D-type flip-flop 3. It will be understood that for testing purposes the operation of the circuit as a whole with each flip-flop 3 in either one of its two possible states must be considered. In the case of the logic elements no such comparable consideration exists.

To enable testing of the circuit, connections over and above those required for operation of the integrated circuit per se are provided whereby the flip-flops 3 are connected in series to form a shift register 5, hereinafter referred to as the scan path.

Referring now particularly to Figure 2, which shows in detail a part of the scan path including three flip-flops 3A, 3B and 3C, in general each flip-flop 3 in the scan path has an output Q which is connected to a point in the combinational logic arrangement 1 and to a first input S of the succeeding flip-flop in the scan path. In addition, each flip-flop 3 has a second input D which is connected to a point in the combinational logic arrangement 1. In addition, each flip-flop 3 has two clocking inputs X and Y clock pulses applied to which respectively cause the output Q to assume the same binary state (0 or 1) as the S or D input. It should be understood that the points in the combinational logic 1 to which the output Q and the input D of each flip-flop are connected is determined by the design of the integrated circuit per se. However, the connection between the output Q of each flip-flop 3 and the input S of the next flip-flop 3 in the scan path is provided solely for test purposes and does not perform any function when the integrated circuit is operating normally, i.e. not being tested.

The first flip-flop 3 in the scan path has its S input connected to the output of a test sequence generator 7, further described below.

The last flip-flop 3 in the scan path has its output Q connected to the input of a signature analyser 9 further described below.

It will be appreciated that whilst in general each flip-flop 3 has both an input and an output connected to the computational logic arrangement, some flip-flops may have only an input or an output so connected. Similarly, further flip-flops may be included in the scan path 5 which serve no function in the integrated circuit per se, and are provided only for test purposes, e.g. to provide or receive a signal which in operation of the integrated circuit is derived from a point external of the integrated circuit.

In operation of the testing arrangement clock pulses are supplied from a source 10 to the generator 7 and the flip-flops 3 in the scan path to cause the test sequence generator 7 to supply a sequence of bits to the scan path 5 equal to the number of flip-flops 3 in the scan path 5, clock pulses being applied to the X clocking input of the flip-flops for this purpose. The Q output of each of the flip-flops 3 in the scan path 5 consequently assumes a state determined by a different one of the sequence of bits fed to the scan path 5 by the test generator 7. The signals at the D inputs of the flip-flops 3 take up states dependent on the design and configuration of the combinational logic arrangement. A clock pulse is then applied simultaneously to the Y clocking input of all the flip-flops 3 causing the flip-flops 3 to take up the states of the signals at their D inputs.

Further clock pulses are then applied to the generator 7, the analyser 9 and the X clocking inputs of the flip-flops 3 causing the string of bits contained in the scan path 5 to be fed to the analyser 9 and a new sequence of bits to be entered into the scan path 5 from the test generator 7, whereupon the test cycle is repeated.

The analyser 9 comprises any suitable means for determining whether the sequences fed to it from the scan path 5 are correct. The analyser typically comprises some means of compacting the sequences of bits fed to it such as an LFSR and comparing the compacted data or signature with a computed correct signature.

To ensure exhaustive testing of the integrated circuit, the sequences of bits supplied to the scan path 5 by the generator 7 must be such that for each so-called cone of the combinational logic arrangement 1, all possible combinations of inputs are applied to the inputs of the cone. The cones present in the integrated circuit are identified by considering each output from the combinational logic 1 to the scan path 5, and identifying the inputs to the combinational logic 1 from the scan path 5 which are connected with, and whose states may therefore effect, the state of that output.

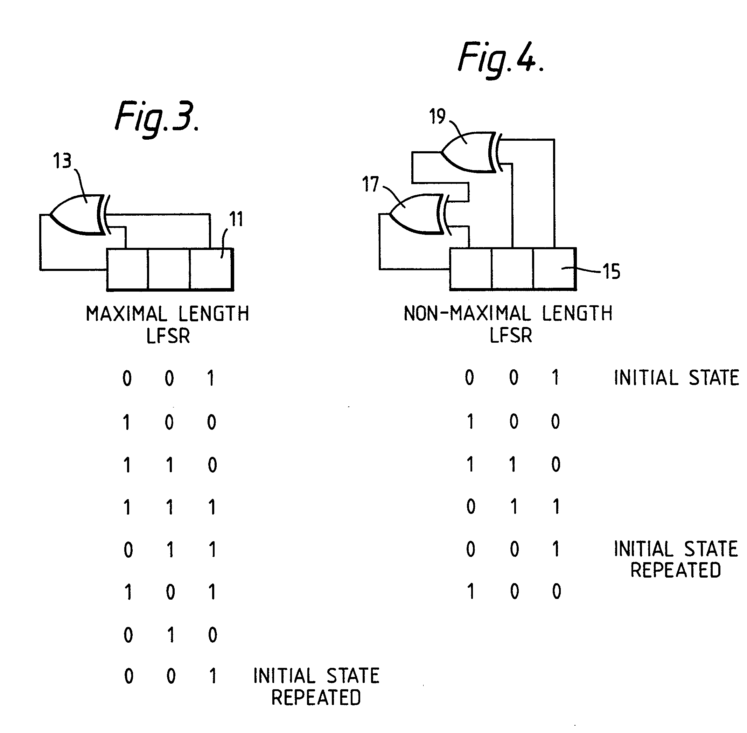

To facilitate this requirement the test generator 7 comprises a linear feedback shift register (LFSR) of maximal length, that is to say an LFSR arranged so that when clocked it cycles through $2^N - 1$ different states before returning to its initial state, N being the number of stages in the LFSR. By way of illustration a three stage LFSR of maximal length and the manner in which the states of its stages cycle when clocked is shown in Figure 3. As will be seen, this LFSR comprises a 3-stage shift register 11 whose first stage is set on clocking to the state of the output of an exclusive OR gate 13 whose inputs are derived from the first and third stages of the register 11. In contrast, Figure 4 shows a non-maximal length LFSR comprising a three-stage shift register 15 whose first stage is set on clocking to the output of an exclusive OR gate 17 whose inputs are derived from the first stage of the LFSR register 15 and the output of a further exclusive OR gate 19 whose inputs are derived from the second and third stages of the LFSR register 15.

To further facilitate the requirement regarding the inputs to the cones of the combinational logic, the generator 7 comprises an LFSR chosen so that the number of different possible states $2^N$ -1 which it has and the number of stages i.e. flip-flops 3 in the scan path 5 are relatively prime.

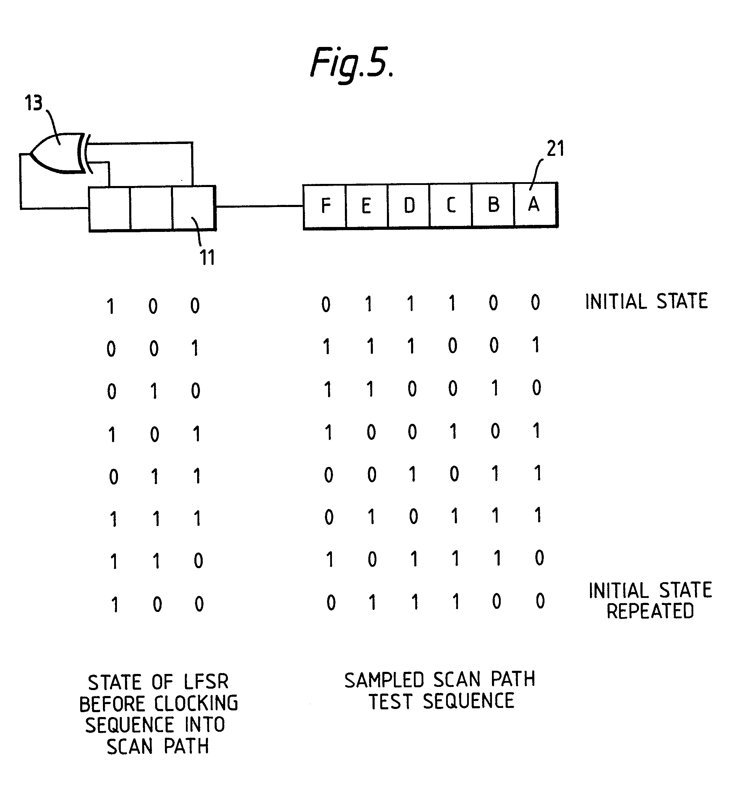

This is illustrated in Figure 5 which shows the LFSR 11, 13 of Figure 3 the state of whose final stage constitutes the input of a six stage scan path 21, the stages of the scan path 21 being referenced A to F respectively. Since the LFSR 11, 13 has seven ($2^3$ -1) possible different states and the scan path 21 has six stages and the greatest common divisor of six and seven is one the LFSR and scan path are of the required relative form. In operation of the arrangement, the LFSR 11, 13 is clocked six times to insert each new sequence of data into the scan path 21. In Figure 4 all the possible sequences of data are shown on the right under the scan path 21, and the state of the LFSR 11, 13 prior to clocking in each new sequence is shown on the left under the LFSR. As will be seen, each set of three consecutive stages of the scan path cycles through all seven of the possible states of the LFSR 11, 13. In order that any cone having inputs connected to any three such stages will be exhaustively tested, it is further necessary to initialise the scan path 21 to an all zeros stage, such a state not being obtained from the LFSR 11, 13.

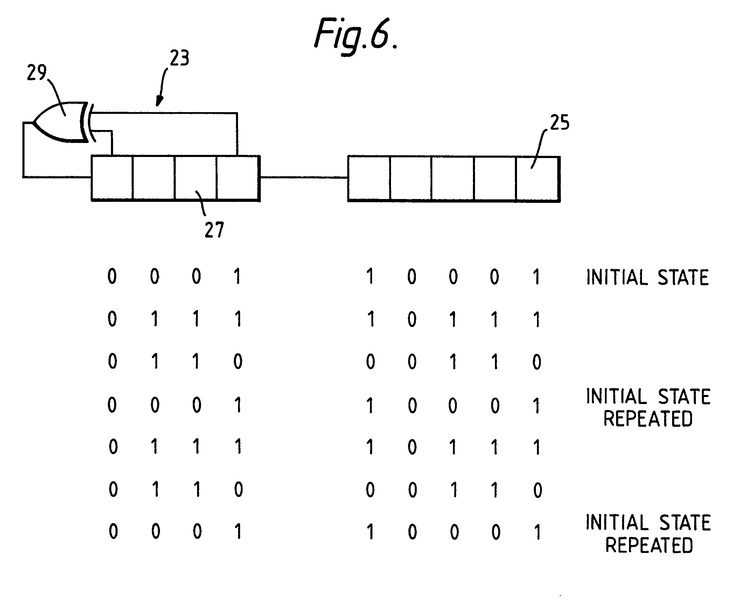

In contrast, an LFSR 23 and scan path 25 not of the required relative form are shown in Figure 6. In this arrangement the LFSR 23 comprises a four stage shift register 27 whose first stage is set on clocking to the state of the output of an exclusive OR gate 29 whose inputs are derived from the first and fourth stages of the register 27. As may be shown, this arrangement is of maximal length and therefore has fifteen ($2^4-1$) different possible states. The scan path 25 has six stages so that the number of stages in the scan path and the number of different possible states of the LFSR 23 are not relatively prime. As a result, the test sequence inserted into the scan path 25 repeat after three sequences and no set of two or more stages of the scan path 25 cycles through all its possible different states.

It will be appreciated that in a practical embodiment of the invention the scan path 5 will have a much larger number of stages than is shown in Figures 5 or 6. Consequently, the time taken to insert new sequences into the scan path from the LFSR test generator 7 is a large fraction of the total test time.

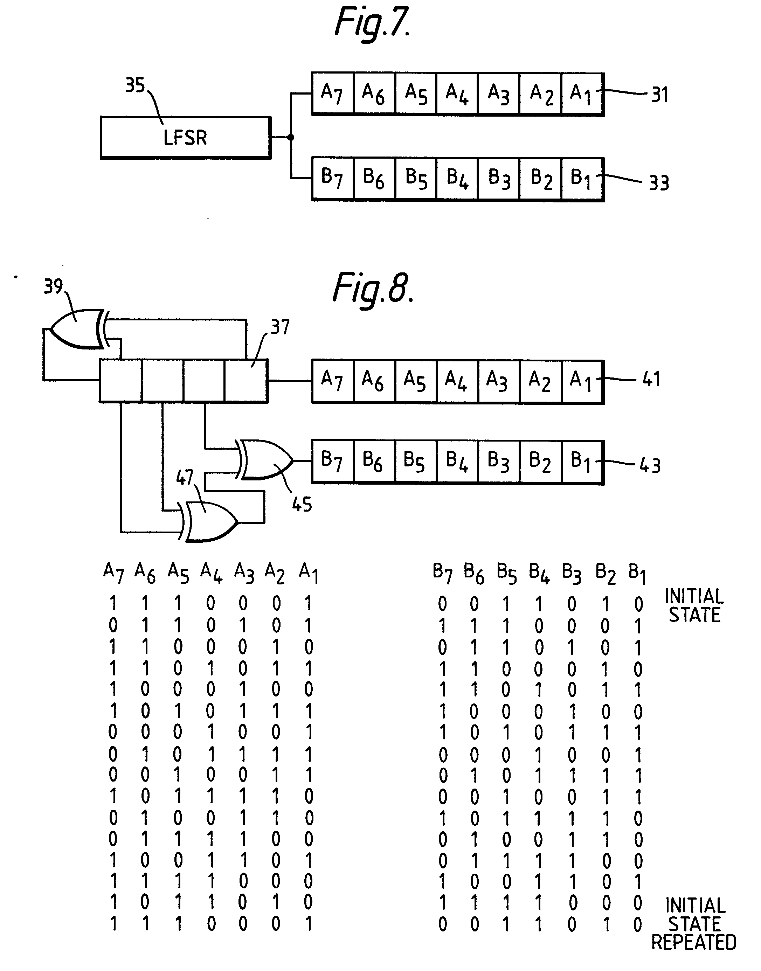

To reduce this problem the scan path 5 may be partitioned into two or more sections of equal length fed from the LFSR test generator 7 in parallel. In the simplest possible form of such an arrangement each section is fed with the same sequence from the test generator 7, Figure 7 illustrating one such arrangement wherein two seven stage scan path sections 31 and 33 are fed from an LFSR 35. In such an arrangement the same sequence of states occurs in corresponding stages of each section, i.e. stage Ax of section 31 and stage Bx of section 33, where $\underline{x}$ is the number of the stage. This has the disadvantage that, since no two inputs for a cone must have corresponding inputs, if the cone is to be exhaustively tested, the possible selection of inputs for a cone is reduced.

This difficulty can be overcome by choosing an LFSR having a number of possible different stages equal to or greater than the total number of stages in the scan path, and arranging for each stage of each section of the scan path to receive a uniquely phase shifted version of the sequence of bits produced by the LFSR. It is pointed out in this connection that an LFSR having P different states produces in each and every stage of itself and hence of the scan path a repeating sequence of P bits. This sequence is phase shifted by one bit from stage to stage of the LFSR and by one bit from stage to stage of each section of the scan path. Hence, unless P is equal to or greater than the total number of stages in the scan path, it is impossible for each stage of the scan path to receive a uniquely phase shifted version of the LFSR bit sequence, i.e. for the sections to receive non-overlapping portions of the LFSR bit sequence.

One example of an appropriately chosen LFSR and sectional scan path is shown in Figure 8.

In this arrangement an LFSR having a four stage shift register 37 whose first stage is set on clocking to the state of the output of an exclusive OR gate 39 whose inputs are derived from the first and fourth stages of the register 37. The scan path comprises two sections 41 and 43 each having seven stages A1 to A7 or B1 to B7. The scan path section 41 is fed from the final stage of the LFSR register 37, the sequences of bits appearing in the section being as shown in Figure 8 starting with an initial state 0001 in the register 37.

The other scan path section 43 is fed from the output an exclusive OR gate, 45 whose inputs are derived from the third stage of the LFSR register 29 and the output of a further exclusive OR gate 47 whose inputs are derived from the first and second stages of the LFSR register 37. The sequences produced in the scan path section 43 are shown in Figure 8.

It will be seen that the LFSR 37 produces a repeating sequence of fifteen bits and that the sequence fed to section 41 of the scan path lags the sequence fed to section 43 by seven bits. Hence each stage of both sections 41 and 43 of the scan path receives a uniquely phase shifted version of the LFSR sequence.

It will be appreciated that a suitable procedure for the selection of exclusive OR gate arrangements for feeding the various scan path sections to obtain non-overlapping portions of the LFSR bit sequence is known from the principles of linear mathematics.

It will be understood that apart from choosing an LFSR of maximal length which has a number of different possible states which is relatively prime to the number of stages in the scan path, the LFSR must also be chosen so that all of the cones of the combinational logic are exhaustively tested. Thus, with the arrangement of Figure 5, for a cone having inputs connected to stages A, C and D of the scan path 21 only four i.e. $2^N/2$ of the seven possible combinations of different states produced by the LFSR 11, 13 are applied to the inputs of the cone, and the cone will not be exhaustively tested. However, this problem can almost invariably be overcome by re-ordering of the connections between the scan path 5 and the combinational logic, or by choice of another LFSR in accordance with the maximal length and relatively prime rules.

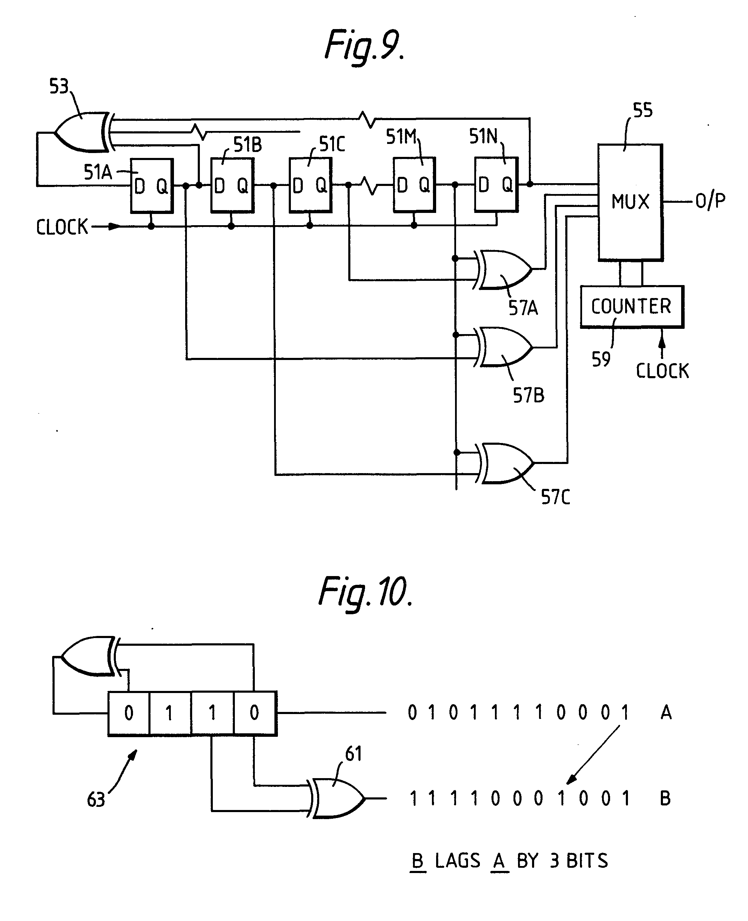

An alternative solution to this problem is to apply to the scan path interleaved phase shifted sequences from a single LFSR. Such an arrangement is illustrated in general form in Figure 9.

Referring to Figure 9, the LFSR 51 comprises N serially connected flip-flop stages 51A to 51N, the first stage 51A of which is set on clocking to the state of an exclusive OR gate 53 whose inputs are derived from appropriate ones of the other stages such that the LFSR is of maximal length. The output of the final stage 51N is fed to one input of a multiplexer 55, and the other inputs of the multiplexer are fed from the outputs of respective ones of a number of exclusive OR gates 57A, 57B, 57C. The inputs of the exclusive OR gates 57A etc. are derived from the outputs of selected ones of the stages of the LFSR 51 so that the signals applied to the inputs of the multiplexer are all differently phase shifted versions of the same basic sequence.

By way of illustration Figure 10 shows an exclusive OR gate 61 whose inputs are derived from the last two stages of a four stage maximal length LFSR 63 to produce at its output the same sequence as appears at the output of the LFSR but lagging the LFSR sequence by three bits.

The multiplexer 55 is controlled by a counter 59 in response to the clocking pulses applied to the LFSR 51 so that at the output of the multiplexer 55 the four inputs to the multiplexer appear in the sequence A1, B1, C1, D1, A2, B2, C2, D2, A3 etc. where A1, A2 etc. is the sequence at the output of the LFSR 51 and A2, B2 etc. A3, B3 etc. and A4, B4 etc. are the sequences at the outputs of gates 57A, 57B and 57C respectively. Thus, the output of the multiplexer 55, which is applied to the scan path (not shown) comprises an interleaving of the various phase shifted versions of the sequence produced by the LFSR 51. The task of finding an LFSR in accordance with the maximum length and relatively prime rules which will exhaustively test a cone whose inputs are at fixed positions on the scan path is thus very much simplified. Furthermore, this technique frequently enables the use of an LFSR having a small number of stages than would otherwise be necessary to achieve exhaustive testing, thereby reducing the time consumed in carrying out exhaustive testing.

-13-

In a practical embodiment of an integrated circuit testing arrangement according to the invention, the test generator and analyser are suitably fabricated on the same semiconductor chip as the integrated circuit per se. The remaining parts of the testing arrangement such as a clock pulse generator and automatic test control equipment to enable the circuit to effect self testing may also be incorporated on the same chip, or alternatively may be fabricated on a second chip, or in any other separate form.

0164209

-14-

CLAIMS

1. An integrated circuit testing arrangement comprising: a scan path (5) comprising bistable elements (3A, B, C etc) of the integrated circuit connected, for testing purposes, in a series shift register arrangement, the elements of the scan path each having an output connected to an input of a combinational logic arrangement (1) of the integrated circuit and an input connected to an output of said combinational logic arrangement; a test sequence generator (7) for supplying binary data for clocking into the scan path for test purposes, the generator being arranged to supply sequences of data to the scan path each having a number of bits equal to the number of elements in the scan path; means (10) for clocking the elements of the scan path to cause each element to assume either the same state as the preceding element in the scan path, or to assume the state of the associated output of the combinational logic arrangement, the clocking means being operable to cause alternately the scan path elements to assume the states of the associated outputs of the combinational logic arrangement, and to receive a new sequence of data from said test generator; and means (9) for analysing data clocked out of said scan path as each new sequence of data is received from said generator; characterised in that said generator is arranged to enter successive sequences of data into the scan path so that, for each set of inputs of the combinational logic arrangement which are connected via the combinational logic arrangement to the same output of the combinational logic arrangement, there are applied to the inputs of that set all possible combinations of different inputs.

2. A testing arrangement according to Claim 1 wherein said test generator (7) comprises an N-stage linear feed back shift register (LFSR)(11, 13) having an output which is supplied to an input of the first element in the scan path, the LFSR being clocked through its possible states to effect insertion of each new sequence of data into the scan path (21), the LFSR having $2^N - 1$ different possible states, and the number of different possible states and the number of elements in the scan path being relatively prime.

3. A testing arrangement according to Claim 2 wherein the scan path is partitioned into two or more sections (31, 33 or 41, 43) of equal length fed from the LFSR (35, or 37, 39, 45, 47) in parallel.

4. A testing arrangement according to Claim 3 wherein said LFSR (37, 39, 45, 47) has a number of possible different states equal to or greater than the total number of elements in the scan path (41, 43) and each section (41 or 43) of the scan path receives a differently phased version of the output of the LFSR so that each element of the scan path receives a uniquely phase shifted version of the sequence of bits produced by the LFSR.

5. A testing arrangement according to Claim 2 wherein said scan path is connected with said LFSR (51) via a multiplexer (55) to which multiplexer there are applied a plurality of differently phase shifted versions of the output of said LFSR, the multiplexer being controlled so that the signal applied to said scan path comprises said differently phase shifted versions of the output of the LFSR interleaved with one another.

6. A testing arrangement according to Claim 5 wherein at least one of said differently phase shifted versions of the output of the LFSR is derived by way of an exclusive OR gate arrangement (57A, 57B or 57C) in response to the outputs of at least two stages of the LFSR.

0164209

1/6

# Fig.1.

CLOCK PULSE SOURCE

TEST SEQUENCE GENERATOR

7

SCAN PATH

5

ANALYSER

10

COMBINATIONAL LOGIC

1

# Fig.2.

3A

S   Q
D
X   Y

3B

S   Q
D
X   Y

3C

S   Q
D
X   Y

1

COMBINATIONAL LOGIC

# Fig.3.

13

MAXIMAL LENGTH
LFSR

| | | |
|---|---|---|
| 0 | 0 | 1 |
| 1 | 0 | 0 |
| 1 | 1 | 0 |
| 1 | 1 | 1 |
| 0 | 1 | 1 |
| 1 | 0 | 1 |
| 0 | 1 | 0 |
| 0 | 0 | 1 |

INITIAL STATE
REPEATED

# Fig.4.

19

17

15

NON-MAXIMAL LENGTH
LFSR

| | | | |
|---|---|---|---|
| 0 | 0 | 1 | INITIAL STATE |
| 1 | 0 | 0 | |
| 1 | 1 | 0 | |
| 0 | 1 | 1 | |
| 0 | 0 | 1 | INITIAL STATE REPEATED |
| 1 | 0 | 0 | |

# Fig.5.

| F | E | D | C | B | A |
|---|---|---|---|---|---|

| 1 | 0 | 0 | | 0 | 1 | 1 | 1 | 0 | 0 | INITIAL STATE |
|---|---|---|---|---|---|---|---|---|---|---|
| 0 | 0 | 1 | | 1 | 1 | 1 | 0 | 0 | 1 | |
| 0 | 1 | 0 | | 1 | 1 | 0 | 0 | 1 | 0 | |
| 1 | 0 | 1 | | 1 | 0 | 0 | 1 | 0 | 1 | |
| 0 | 1 | 1 | | 0 | 0 | 1 | 0 | 1 | 1 | |
| 1 | 1 | 1 | | 0 | 1 | 0 | 1 | 1 | 1 | |
| 1 | 1 | 0 | | 1 | 0 | 1 | 1 | 1 | 0 | |
| 1 | 0 | 0 | | 0 | 1 | 1 | 1 | 0 | 0 | INITIAL STATE REPEATED |

STATE OF LFSR
BEFORE CLOCKING
SEQUENCE INTO
SCAN PATH

SAMPLED SCAN PATH
TEST SEQUENCE

# Fig.6.

| 0 | 0 | 0 | 1 | | 1 | 0 | 0 | 0 | 1 | INITIAL STATE |
| 0 | 1 | 1 | 1 | | 1 | 0 | 1 | 1 | 1 | |
| 0 | 1 | 1 | 0 | | 0 | 0 | 1 | 1 | 0 | |
| 0 | 0 | 0 | 1 | | 1 | 0 | 0 | 0 | 1 | INITIAL STATE REPEATED |
| 0 | 1 | 1 | 1 | | 1 | 0 | 1 | 1 | 1 | |
| 0 | 1 | 1 | 0 | | 0 | 0 | 1 | 1 | 0 | |
| 0 | 0 | 0 | 1 | | 1 | 0 | 0 | 0 | 1 | INITIAL STATE REPEATED |

## Fig.7.

## Fig.8.

| $A_7$ | $A_6$ | $A_5$ | $A_4$ | $A_3$ | $A_2$ | $A_1$ | | $B_7$ | $B_6$ | $B_5$ | $B_4$ | $B_3$ | $B_2$ | $B_1$ | |
|---|---|---|---|---|---|---|---|---|---|---|---|---|---|---|---|
| 1 | 1 | 1 | 0 | 0 | 0 | 1 | | 0 | 0 | 1 | 1 | 0 | 1 | 0 | INITIAL STATE |
| 0 | 1 | 1 | 0 | 1 | 0 | 1 | | 1 | 1 | 1 | 0 | 0 | 0 | 1 | |
| 1 | 1 | 0 | 0 | 0 | 1 | 0 | | 0 | 1 | 1 | 0 | 1 | 0 | 1 | |
| 1 | 1 | 0 | 1 | 0 | 1 | 1 | | 1 | 1 | 0 | 0 | 0 | 1 | 0 | |
| 1 | 0 | 0 | 0 | 1 | 0 | 0 | | 1 | 1 | 0 | 1 | 0 | 1 | 1 | |
| 1 | 0 | 1 | 0 | 1 | 1 | 1 | | 1 | 0 | 0 | 0 | 1 | 0 | 0 | |
| 0 | 0 | 0 | 1 | 0 | 0 | 1 | | 1 | 0 | 1 | 0 | 1 | 1 | 1 | |
| 0 | 1 | 0 | 1 | 1 | 1 | 1 | | 0 | 0 | 0 | 1 | 0 | 0 | 1 | |
| 0 | 0 | 1 | 0 | 0 | 1 | 1 | | 0 | 1 | 0 | 1 | 1 | 1 | 1 | |
| 1 | 0 | 1 | 1 | 1 | 1 | 0 | | 0 | 0 | 1 | 0 | 0 | 1 | 1 | |
| 0 | 1 | 0 | 0 | 1 | 1 | 0 | | 1 | 0 | 1 | 1 | 1 | 1 | 0 | |
| 0 | 1 | 1 | 1 | 1 | 0 | 0 | | 0 | 1 | 0 | 0 | 1 | 1 | 0 | |
| 1 | 0 | 0 | 1 | 1 | 0 | 1 | | 0 | 1 | 1 | 1 | 1 | 0 | 0 | |
| 1 | 1 | 1 | 1 | 0 | 0 | 0 | | 1 | 0 | 0 | 1 | 1 | 0 | 1 | |
| 1 | 0 | 1 | 1 | 0 | 1 | 0 | | 1 | 1 | 1 | 1 | 0 | 0 | 0 | INITIAL STATE |
| 1 | 1 | 1 | 0 | 0 | 0 | 1 | | 0 | 0 | 1 | 1 | 0 | 1 | 0 | REPEATED |

## Fig.9.

## Fig.10.

0 1 0 1 1 1 1 0 0 0 1   A

1 1 1 1 0 0 0 1 0 0 1   B

<u>B</u> LAGS <u>A</u> BY 3 BITS

0164209

European Patent Office

**EUROPEAN SEARCH REPORT**

Application number

EP 85 30 2946

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | IEEE TRANSACTIONS ON COMPUTERS, vol. C-31, no. 1, January 1982, pages 2-15, IEEE, New York, US; T.W. WILLIAMS et al.: "Design for testability - a survey" * Page 10, column 1, paragraph C - column 2, line 5; figure 15; page 11, column 2, paragraph A - page 13, column 1, line 2; figures 19-21 * | 1 | G 01 R 31/28 |
| A | US-A-3 790 885 (JAMES) * Abstract * | 1 | |
| A | IBM JOURNAL OF RESEARCH AND DEVELOPMENT, vol. 27, no. 3, May 1983, pages 265-272, New York, US; E.B. EICHELBERGER: "Random-pattern coverage enhancement and diagnosis for LSSD logic self-test" * Page 266, column 1, lines 9-25; figures 1-3 * | 1,2 | |

TECHNICAL FIELDS SEARCHED (Int. Cl.4)

G 01 R 31/28
G 06 F 11/26

The present search report has been drawn up for all claims

| Place of search | Date of completion of the search | Examiner |
|---|---|---|
| THE HAGUE | 12-08-1985 | GUIVOL Y. |